Europäisches Patentamt

European Patent Office

Office européen des brevets

(11) Veröffentlichungsnummer: **0 082 276**

**A1**

(12) ## EUROPÄISCHE PATENTANMELDUNG

(21) Anmeldenummer: **82109993.4**

(22) Anmeldetag: **28.10.82**

(51) Int. Cl.³: **A 44 C 27/00**
**B 23 C 1/20**

(30) Priorität: **19.11.81 DE 3145913**

(43) Veröffentlichungstag der Anmeldung:
**29.06.83 Patentblatt 83/26**

(84) Benannte Vertragsstaaten:
**CH FR GB IT LI**

(71) Anmelder: **Fleissner, Fritz**
**Rudigierstrasse 1**
**A-4020 Linz(AT)**

(72) Erfinder: **Fleissner, Fritz**
**Rudigierstrasse 1**
**A-4020 Linz(AT)**

(74) Vertreter: **Finck, Dieter et al,**
**Patentanwälte v. Füner, Ebbinghaus, Finck**
**Mariahilfplatz 2 & 3**
**D-8000 München 90(DE)**

(54) **Von Hand geführter Fräser zum Fräsen einer Innenschulter an einer Schmucksteinfassung.**

(57) Zur Ausbildung einer Steinauflage für einen Schmuckstein wird ein von Hand geführter Fräser (1, 2, 5) verwendet, dessen Fräskopf (5) an einem Ende einer Welle (2) sitzt. Angrenzend an den Fräskopf (5) ist an der Welle (2) ein rotationssymmetrisches Führungsglied (4), gewöhnlich eine runde Metallscheibe, befestigt, das mit seiner ebenen Fläche auf dem Rand der Fassung (10) beim Fräsen aufliegt.

FIG.1

0082276

Von Hand geführter Fräser zum Fräsen einer
Innenschulter an einer Schmucksteinfassung

Die Erfindung betrifft einen von Hand geführten Fräser
zum Fräsen einer Innenschulter an einer Schmucksteinfassung mit einer zylindrischen Welle und einem an
einem Wellenende ausgebildeten Fräskopf.

Für die Ausbildung von Innenschultern an runden Schmucksteinfassungen werden Fräser verwendet, die eine zylindrische Welle aufweisen und an deren einem Wellenende
ein Fräskopf ausgebildet ist, dessen Durchmesser dem
Innendurchmesser der auszubildenden Innenschulter entspricht. Das bedeutet, daß für unterschiedliche Abmessungen der kreisförmigen Schmucksteinfassungen jeweils
ein anderer Fräser mit entsprechenden Abmessungen
verwendet werden muß, was vom Gesichtspunkt des Werkzeugeinsatzes sehr aufwendig ist.

Wenn Innenschultern an Schmucksteinfassungen ausgebildet werden sollen, die nicht kreisförmig sondern beispielsweise oval, elliptisch oder eckig sind, werden
diese Innenschultern mit Sticheln von Hand ausgeführt,
was sehr mühsam und zeitraubend ist und die Ausbildung
einer ebenen Steinauflage nur bei sehr viel Geschick
ermöglicht, da dabei Paßgenauigkeiten in der Größenordnung von 0,1 mm gefordert sind, um die Ausbildung von Sprüngen in den Schmucksteinen beim Anschlagen der Innenschulter an den Stein zu verhindern.

Bekannt sind außerdem ein Bohrer (US-PS 2 570 945), dessen Bohrtiefe durch eine am Bohrer festlegbare Scheibe begrenzbar ist, ein Fräswerkzeug, dessen Welle sich durch eine Öffnung in einer ortsfesten, höhenverstellbaren Anschlagplatte hindurcherstreckt (DE-PS 961 925) und ein Werkzeug zum Einfräsen von Rillen in Ledersohlen, das ein der Sohlenkontur folgendes Führungsglied und einen die Frästiefe begrenzenden Abstandsring (DE-AS 10 38 950) hat. Diese Werkzeuge sind jedoch für das Fräsen von Innenschultern an Schmucksteinfassungen mit von der Kreisform abweichender Kontur nicht einsetzbar.

Die der Erfindung zugrunde liegende Aufgabe besteht deshalb darin, den von Hand geführten Fräser der eingangs genannten Art so auszubilden, daß mit ihm auf einfache Weise an von der Kreisform abweichenden Schmucksteinfassungen Innenschultern mit der erforderlichen Paßgenauigkeit für die Steinauflage gefräst werden können.

Diese Aufgabe wird bei dem von Hand geführten Fräser der eingangs genannten Art dadurch gelöst, daß zum Fräsen einer Innenschulter mit einer von der Kreisform abweichenden Kontur an der Welle unmittelbar angrenzend an den Fräskopf ein rotationssymmetrisches Führungsglied befestigt ist, das eine dem Fräskopf zugewandte ebene Fläche aufweist.

Vorteilhafterweise ist das Führungsglied eine kreisrunde Metallplatte.

Dabei ist zweckmäßigerweise das Führungsglied an der Welle unwuchtfrei angelötet.

Mit dem erfindungsgemäßen Fräser läßt sich auf äußerst einfache Weise die für das Vermeiden von Sprüngen im Schmuckstein erforderliche Paßgenauigkeit der Auflagefläche erreichen, auch wenn durch das Führungsglied die Sicht auf die Frässtelle verhindert wird. Durch mehrfaches Absetzen des Fräswerkzeugs und Einpassen des Schmucksteins läßt sich der erforderliche Hohlraum ohne weiteres ausfräsen, wobei die Genauigkeit der Fräsung senkrecht zur Auflagefläche nur insoweit erheblich ist, daß die Innenschulter, die zur Halterung des Steins anschließend angeschlagen wird, nicht zu dünn wird und das Einsetzen des Schmucksteins vor dem Anschlagen ohne große Einpreßkräfte gewährleistet. Mit dem erfindungsgemäßen Fräser kann die Arbeitszeit verglichen mit dem Justieren mit einem Stichel wesentlich verkürzt werden. Außerdem können mit dem Fräser ganz genaue Steinauflagen auch von Ungeübten gefräst werden.

Mit dem erfindungsgemäßen Fräser lassen sich somit äußerst präzise Steinauflagen an Fassungen unabhängig von deren Form äußerst einfach ausbilden, wobei die Fassungen oval, elliptisch, ja sogar eckig sein können. Für die Ausbilung der Ecken werden dann Fräser mit sehr kleinen Durchmessern verwendet.

Anhand der Zeichnung wird die Erfindung beispielsweise näher erläutert. Es zeigt:

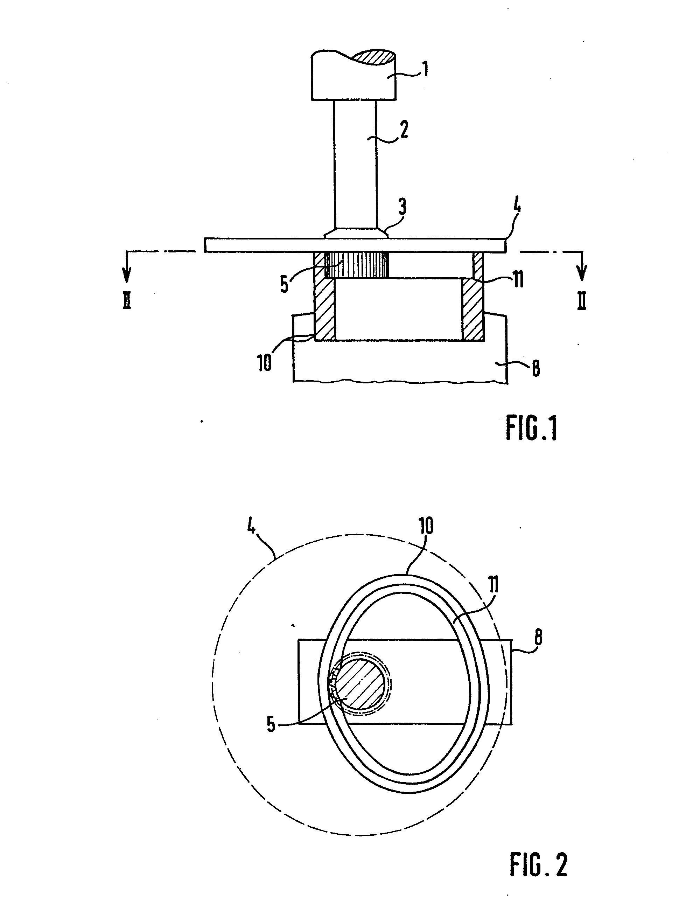

Fig. 1 einen Fräser beim Fräsen einer Innenschulter an einer elliptischen Fassung und

Fig. 2 den Schnitt II-II von Fig. 1

Der in der Zeichnung gezeigte Fräser hat eine Welle 2, die in einem Griff- und Antriebswerkzeug 1 für die Rotation des Fräsers eingespannt ist. An dem freien Ende der Welle 2 ist ein Fräskopf 5 ausgebildet. Angrenzend an den Fräskopf 5 ist auf der Welle 2 mittels einer Lötung 3 eine runde Metallplatte 4 befestigt.

Wie aus der Zeichnung zu ersehen ist, ist eine elliptische Fassung 10 in einer Spanneinrichtung 8 gehalten. Auf der einen Seite wird in die Fassung 10 eine Innenschulter 11 eingefräst. Dabei liegt die mit der Welle 2 rotierende runde Metallplatte 4 mit ihrer ebenen Fläche auf dem Rand der Fassung auf, so daß der Fräskopf 5 eine Steinauflage ausfräst, die präzis nivelliert ist. Nach dem Einlegen des Steines auf die Steinauflage der Fassung brauchen die verbliebenen Schulterabschnitte nur gegen den Stein angeschlagen werden.

Patentansprüche

1. Von Hand geführter Fräser zum Fräsen einer Innenschulter an einer Schmucksteinfassung mit einer zylindrischen Welle und einem an einem Wellenende ausgebildeten Fräskopf, dadurch gekennzeichnet, daß zum Fräsen einer Innenschulter mit einer von der Kreisform abweichenden Kontur an der Welle (2) unmittelbar angrenzend an den Fräskopf (5) ein rotationssymmetrisches Führungsglied (4) befestigt ist, das eine dem Fräskopf (5) zugewandte ebene Fläche aufweist.

2. Fräser nach Anspruch 1, dadurch gekennzeichnet, daß das Führungsglied (4) eine kreisrunde Metallplatte ist.

3. Fräser nach Anspruch 1 oder 2, dadurch gekennzeichnet, daß das Führungsglied (4) an der Welle (2) unwuchtfrei angelötet ist.

FIG.1

FIG. 2

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | --- <br> CH-A- 509 055 (W. HEISE) <br> * Gesamtes Dokument * | 1 | A 44 C 27/00 <br> B 23 C 1/20 |
| A | --- <br> US-A-4 033 229 (C. SARNELLI) <br> * Anspruch 1; Figur 5 * | 1 | |
| A | --- <br> DE-U-7 932 776 (E. HICK) <br> * Anspruch; Figuren 1, 2 * | 1 | |
| D,A | --- <br> US-A-2 570 945 (G.A. HAWKINS) <br> * Spalte 2, Zeilen 5-22; Figur 3 * | 1 | |
| D,A | --- <br> DE-C- 961 925 (C.F. SCHEER & CIE) <br> * Seite 2, Zeilen 21-35; Figur 1 * | 1 | RECHERCHIERTE SACHGEBIETE (Int. Cl. ³) |
| A | --- <br> DE-C-1 038 950 (W. WITT) <br> * Anspruch 1; Figuren 1, 3 * | 1 | A 44 C 17/00 <br> A 44 C 27/00 <br> B 23 C 1/20 <br> B 23 C 5/00 |
| P,X | --- <br> DE-U-8 133 807 (F. FLEISSNER) <br> * Ansprüche 1-3; Figuren 1, 2 * | 1-3 | B 23 C 9/00 |
| | ----- | | |

Der vorliegende Recherchenbericht wurde für alle Patentansprüche erstellt.

| Recherchenort <br> BERLIN | Abschlußdatum der Recherche <br> 11-02-1983 | Prüfer <br> MARTIN A E W |
|---|---|---|